Europäisches Patentamt

European Patent Office

Office européen des brevets

(19)

(11) EP 1 014 550 A2

(12) EUROPEAN PATENT APPLICATION

(43) Date of publication:
28.06.2000 Bulletin 2000/26

(51) Int Cl.7: H02M 3/335, H02M 1/00, H02J 7/02

(21) Application number: 99650118.5

(22) Date of filing: 17.12.1999

(84) Designated Contracting States:
AT BE CH CY DE DK ES FI FR GB GR IE IT LI LU MC NL PT SE
Designated Extension States:
AL LT LV MK RO SI

(30) Priority: 18.12.1998 IE 981075

(71) Applicant: FORFAS, (trading as PEI Technologies)
Dublin 2 (IE)

(72) Inventors:
• Morrison, Richard Joseph
  South Douglas Road, Cork (IE)
• Egan, Michael Gerard
  Shanakiel, Cork (IE)

(74) Representative: Weldon, Michael James et al
c/o John O'Brien & Associates,
Third Floor,
Duncairn House,
14 Carysfort Avenue
Blackrock, Co. Dublin (IE)

(54) An AC/DC converter

(57) An ac/dc converter has a two switch buck boost (2SBB) ac/dc stage (2) integrated with an isolated full or half-bridge dc/dc stage (3). A modulator (4, 25) for the 2SBB input switch ($Q_1$) controls the current in the power transfer inductor of the 2SBB. It causes dis-continuity of the current while minimising its peak level by exerting control on both turn-on and turn-off of the input switch. An intermediate dc voltage generated by the 2SBB has a level below that of the maximum peak input voltage and control is exerted over the inrush current.

Fig. 1(b)

EP 1 014 550 A2

**Description**

The invention relates to an ac/dc converter of the type comprising a Two Switch Buck Boost (2SBB) ac/dc controlled rectifier stage having a power transfer inductor and being integrated with an isolated dc/dc step-down stage, and a control modulator.

Such converters suffer from a lack of versatility because they do not allow line voltage to be both stepped up and stepped down. Another problem is that there is limited power factor control of the line current. A further problem is that there is limited control of input current.

It is therefore an object of the invention to provide an ac/dc converter to provide effective high line voltage surge immunity, inrush current limiting and a non-isolated output voltage which may be less than the peak line voltage.

Another object of the invention is to provide a reduction in line-side switch current stresses.

According to the invention, there is provided an ac/dc converter of the type comprising a two switch buck boost ac/dc controlled rectifier stage to provide an intermediate dc voltage, a power transfer inductor in the controlled rectifier stage and being integrated with an isolated dc/dc stage to provide a converter dc output voltage isolated from the converter ac input voltage, and a controller with a modulator, characterised in that, the modulator comprises means for causing discontinuity of current through the power transfer inductor while ensuring that its duty cycle is greater than that of an upper switch of a half bridge leg of the dc/dc stage to which the power transfer inductor is connected for all instantaneous levels of the converter ac input voltage less than the intermediate dc voltage.

In one embodiment, the control modulator comprises means for turning a controlled rectifier stage input switch on to dictate the power transferred through the converter, and for turning said input switch off such that the intermediate dc voltage acts to reduce the power transfer inductor current to zero before an upper switch in a half bridge leg of the dc/dc stage is turned off.

In one embodiment, the modulator comprises means for maintaining the switching frequency of the controlled rectifier stage the same as that of the isolated dc/dc converter stage.

In one embodiment, the modulator comprises means for maintaining the intermediate dc voltage at a level below that of a maximum peak of the input converter ac voltage.

In one embodiment, the modulator comprises means for turning off the controlled rectifier stage input switch by converting the current in said input switch to a current sense voltage by a pre-set conversion factor, and by generating a periodic inverse saw-tooth modulator control voltage having a frequency equal to that of the isolated dc/dc stage and having a negative slope proportional to the intermediate voltage divided by the power transfer inductance, by said conversion factor.

In another embodiment, the modulator comprises means for causing the turn-off to occur when said current sense voltage reaches said inverse saw-tooth voltage, and dc offset and phase of said inverse saw-tooth voltage is set such that the current in the power transfer inductor reaches zero a short time interval before the upper switch of the half bridge leg connected to this inductor is turned off.

In one embodiment, the dc/dc stage is a dual active bridge.

In another embodiment, the dc/dc stage is an asymmetric duty cycle forward converter.

In one embodiment, the isolated dc/dc stage comprises a half-bridge forward converter, and the modulator comprises means for controlling one of its half-bridge switches to have a duty cycle of less than 50% and the other half-bridge switch has the balance of the duty cycle so that there is substantially no overlap.

In one embodiment, a lower of the two half bridge switches has the lower duty cycle.

The invention will be more clearly understood from the following description of some embodiments thereof, given by way of example only with reference to the accompanying drawings in which:-

Fig. 1(a) is a diagram showing the power path architecture of an ac/dc converter of the invention, and Fig. 1(b) is a diagram showing the architecture in more detail;

Fig. 2 is a diagram showing a modulator of the converter of Fig. 1;

Figs. 3(a) and 3(b) are plots showing operation of the converter with control modulation;

Fig. 4 is a set of plots showing waveforms of the modulator of Fig.3;

Fig. 5 is a diagram showing modulator control strategy for the converter of Fig 1;

Fig. 6 is a plot showing estimation of a the turn-off time of the line input switch;

Figs. 7 to 12 are plots showing operation of the modulator and converter of Fig. 1;

Fig. 13 is a set of diagrams showing alternative isolated dc/dc converter stages integrated with the 2SBB converter as follows:-

(a) half-bridge converter with secondary full-bridge rectifier and capacitive output filter.

(b) half-bridge converter with secondary push-pull rectifier and capacitive output filter,

(c) full-bridge converter with secondary full-bridge rectifier and inductive output filter, and

(d) full-bridge converter with secondary push-pull rectifier and inductive output filter.

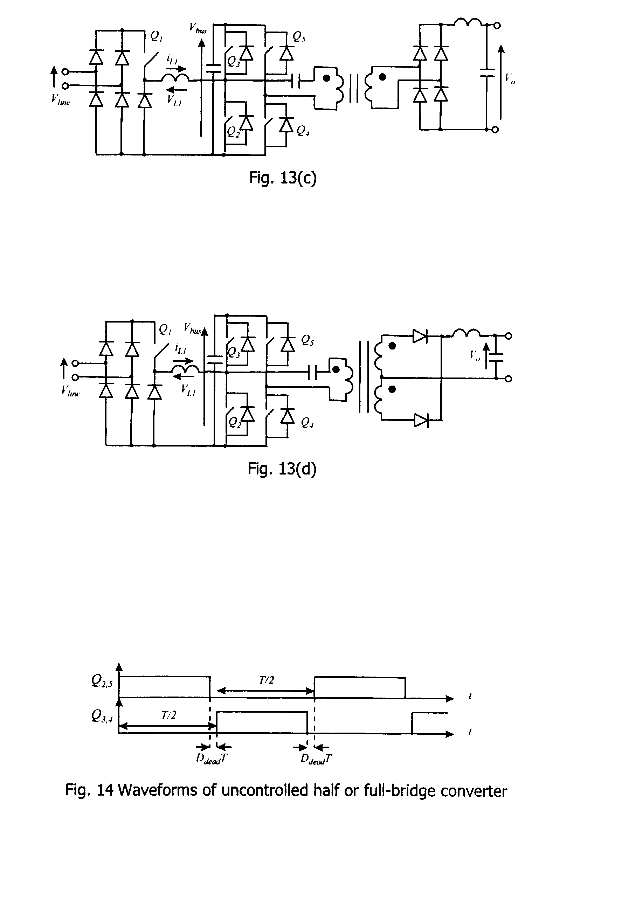

Fig. 14 is a set of plots showing waveforms of uncontrolled half or full-bridge dc/dc stages;

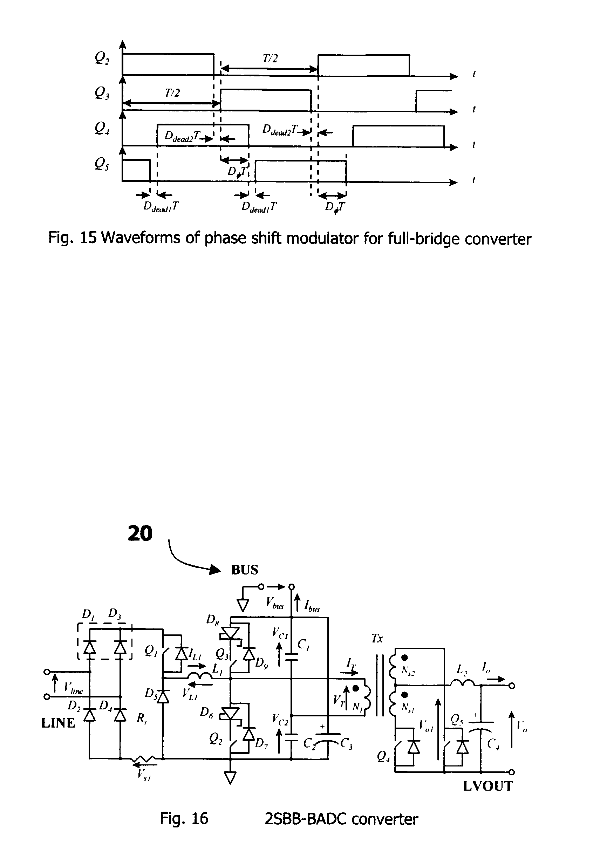

Fig. 15 is a set of plots showing waveforms of a phase shift modulator;

Fig. 16 is a schematic of a two switch buck Boost bi-directional asymmetric duty cycle half bridge forward converter (2SBB-BADC);

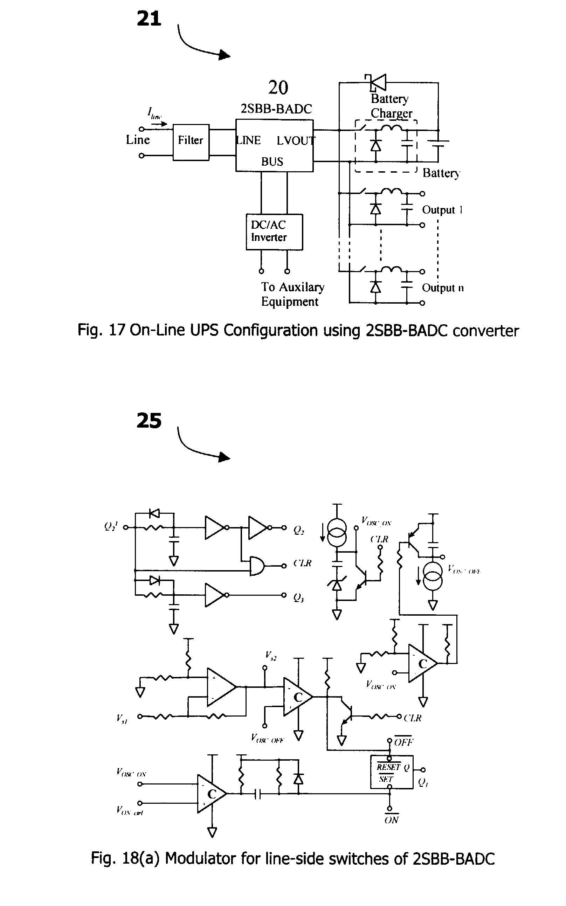

Fig. 17 is an on-line UPS configuration based on the 2SBB-BADC converter;

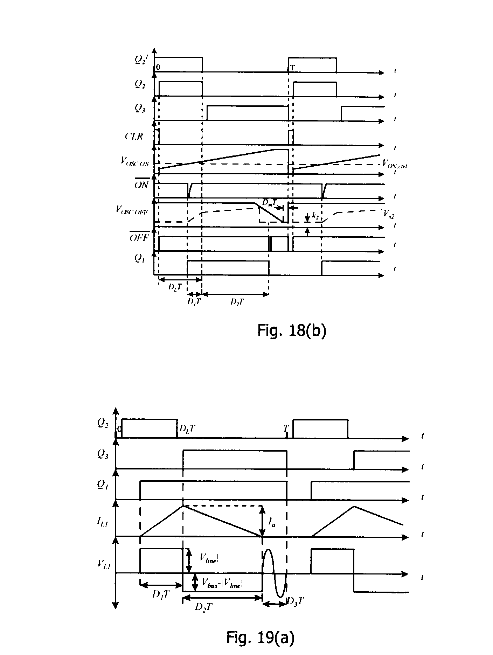

Figs. 18(a) and 18(b) are a schematic diagram and voltage waveforms respectively of a modulator;

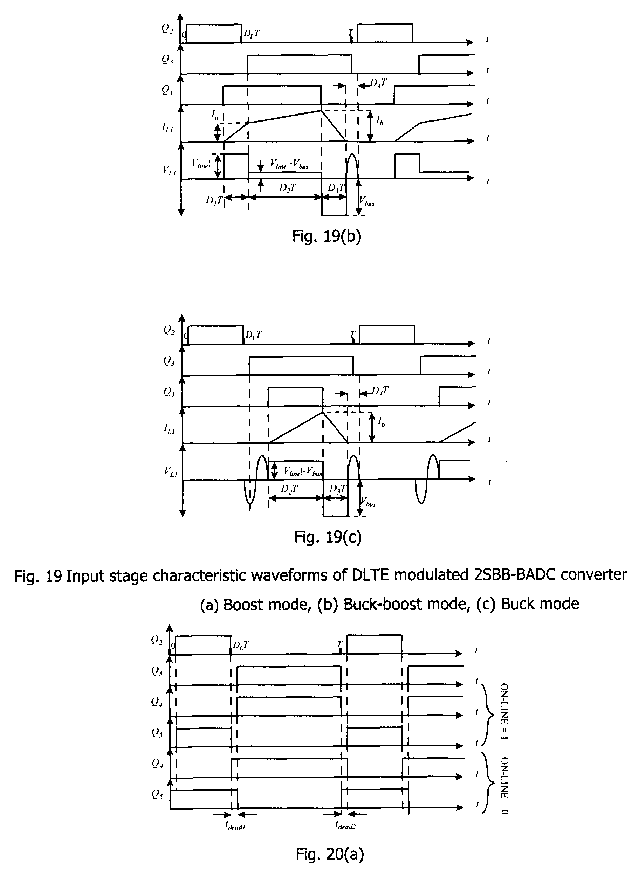

Figs 19(a) to 19(c) show the input stage characteristic waveforms of a modulated 2SBB-BADC converter;

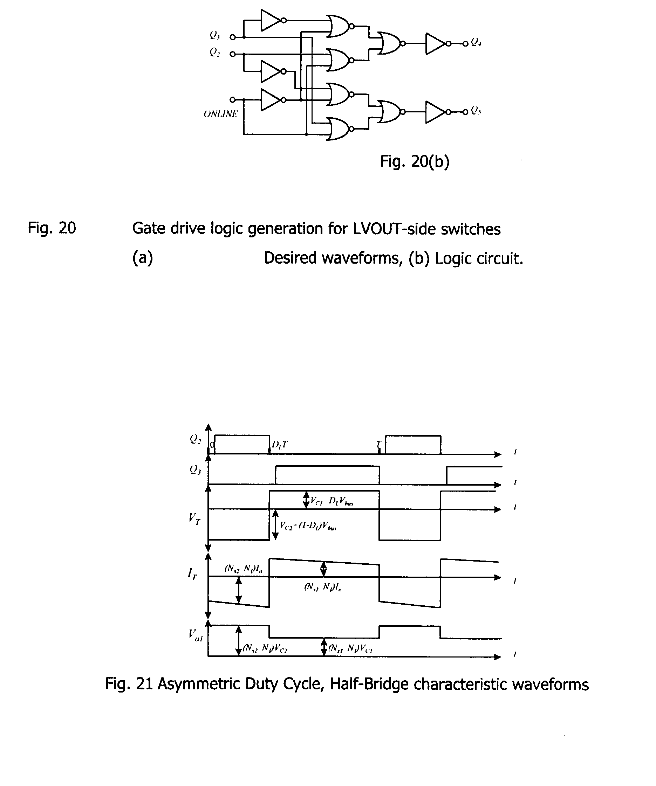

Figs. 20(a) and 20(b) show how the gate drive logic may be generated for LVOUT-side switches;

Fig. 21 shows waveforms of an asymmetric duty dycle, half-bridge forward converter;

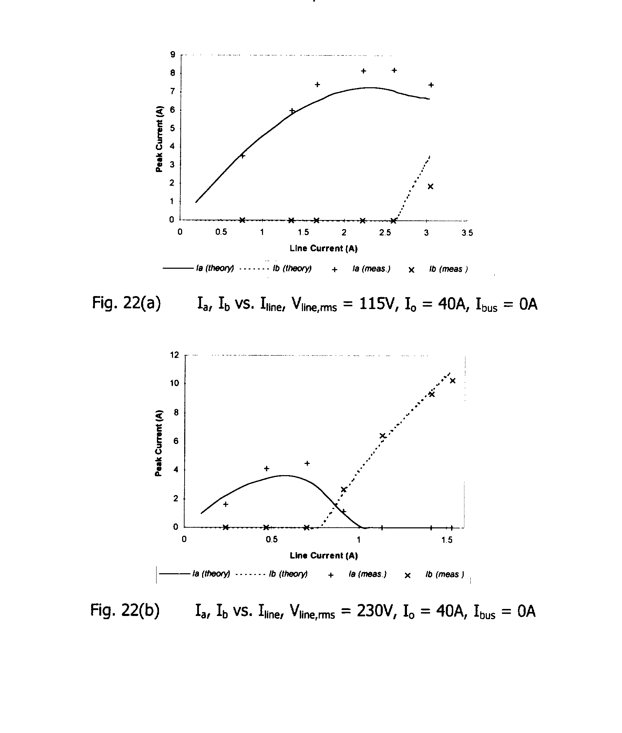

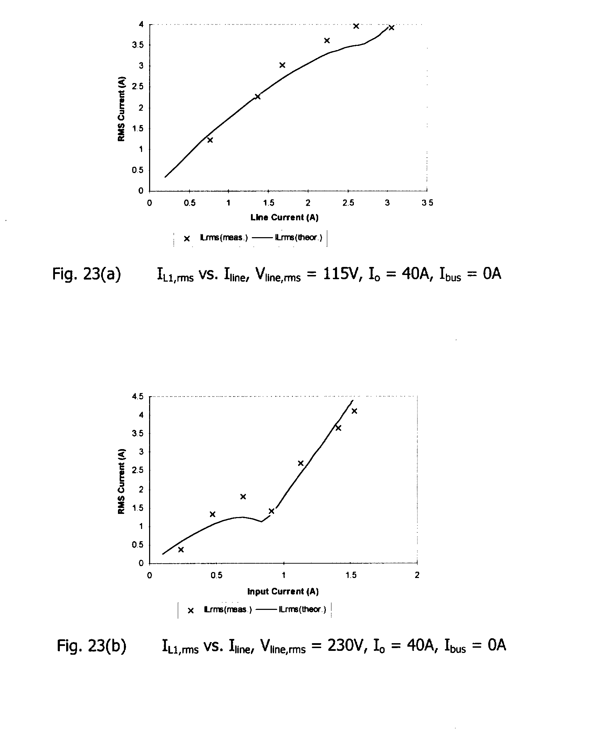

Figs. 22(a) and 22(b) show theoretical and experimental peak currents in a power transfer inductor, and Figs. 23(a) and 23(b) show rms currents of the inductor; and

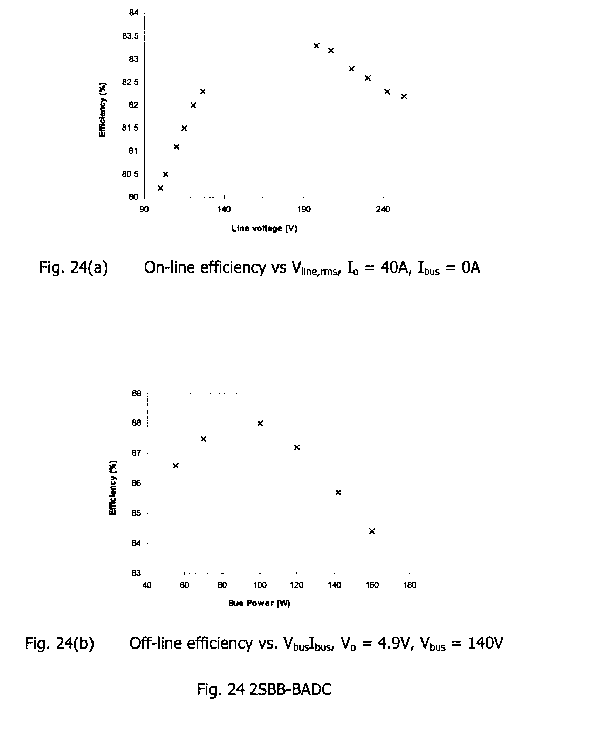

Figs. 24(a) and 24(b) show on-line and off-line efficiency measurements respectively.

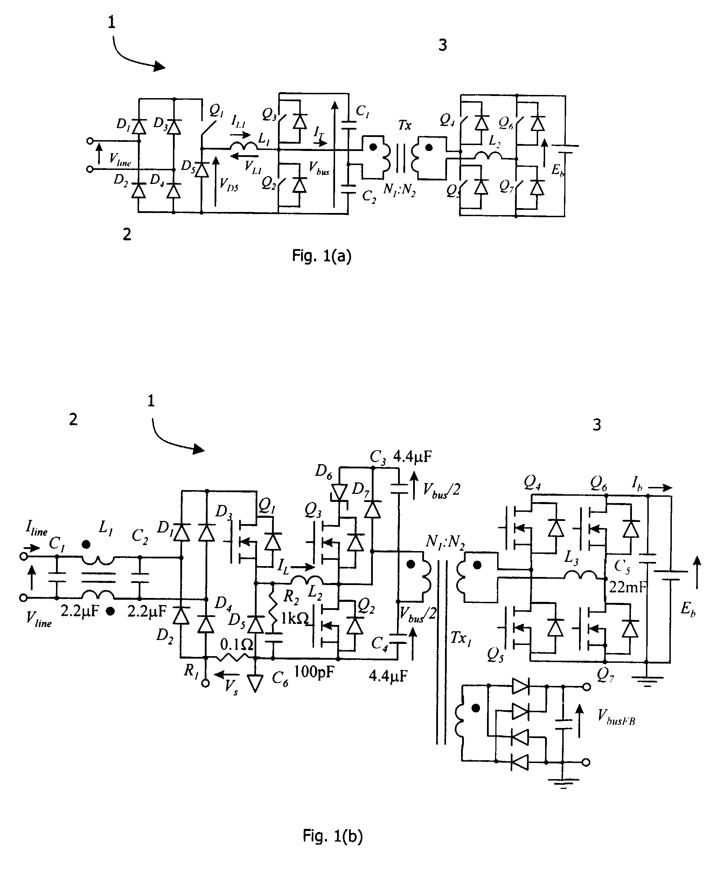

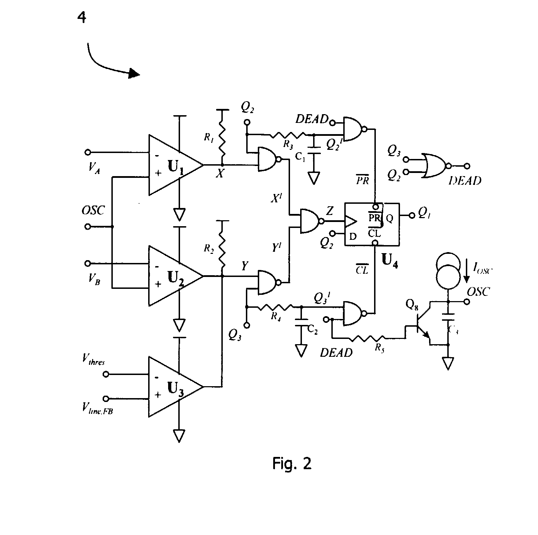

Referring to Fig. 1(a) an ac/dc converter 1 is shown. The converter 1 comprises a 2SBB ac/dc controlled rectifier stage 2 having a power transfer inductor $L_1$. This receives an ac input voltage and provides an intermediate non-isolated dc voltage. The stage 2 is integrated with an isolated dc/dc stage which in this embodiment is a Dual Active Bridge (DAB) 3. This stage provides an isolated dc voltage for the converter 1. The converter 1 also comprises a control modulator 4 shown in Fig. 2. The converter 1 is shown in greater detail in Fig. 1(b). Important details shown in Fig. 1(b) are the realisation of the active switches using MOSFET's and diodes.

The modulator 4 causes discontinuity of current through the power transfer inductor ($L_1$) while ensuring that its duty cycle is greater than that of an upper switch ($Q_3$) of a half bridge leg of the dc/dc stage 3 to which the power transfer inductor is connected for all instantaneous levels of the converter ac input voltage less than the intermediate dc voltage. It also controls a controlled rectifier stage input switch $Q_1$ to turn it on to dictate the power transferred through the converter, and turns this input switch off such that the intermediate dc voltage acts to reduce the power transfer inductor current to zero before an upper switch in a half bridge leg of the dc/dc stage is turned off. The modulator (4) also maintains the switching frequency of the controlled rectifier stage (2) the same as that of the isolated dc/dc converter stage (3), and maintains the intermediate dc voltage at a level below that of a maximum peak of the input converter ac voltage.

In the 2SBB 2, an input ac voltage appears at terminals $V_{line}$ and is rectified by a full bridge $D_1$, $D_2$, $D_3$, and $D_4$. The 2SBB 2 also comprises:

Q1: line input switch
D5: line input free-wheeling diode _

The power transfer inductor $L_1$ is connected to a half bridge leg integrated with the DAB 3 and comprising an upper switch $Q_3$ and a lower switch $Q_2$. A dc bus voltage $V_{bus}$ is provided to a transformer $T_x$ having $N_1$ turns on the 2SBB side and $N_2$ turns on the side connected to the voltage source, $E_b$. The interface between a transformer $Tx_1$ and a voltage source $E_b$ is provided by the full-bridge voltage source inverter comprised of $Q_4$, $Q_5$, $Q_6$ and $Q_7$.

The voltage bus, $V_{bus}$ (intermediate voltage) is halved between capacitors, $C_3$ and $C_4$ as shown in Fig. 1(b), this voltage is not isolated from the line voltages, $V_{line}$. The switches, $Q_3$ and $Q_4$ are switched alternately at 50% duty cycle, the pair of switches, $Q_4$ and $Q_7$ are switched simultaneously at 50% duty cycle, the pair of switches $Q_5$ and $Q_6$ are switched simultaneously at 50% duty cycle, $Q_4$, $Q_7$ and $Q_5$, $Q_6$ are switched alternately. The switching frequency of the half bridge $Q_3$, $Q_4$ is the same as that of the full bridge $Q_4$, $Q_5$, $Q_6$, $Q_7$. The power transferred through the DAB 3 is controlled by variation of the phase shift between these bridges.

The ac/dc converter of the invention also comprises a control modulator 4 shown in Fig. 2, which acts to ensure that the current in $L_1$ is discontinuous. The control modulator 4 comprises means for causing discontinuity of the current ($I_{L1}$) through $L_1$ while ensuring that its duty cycle is greater than that of the upper switch $Q_3$ of the half bridge leg of the DAB 3. In more detail, the control modulator 4 controls the input switch $Q_1$ of the 2SBB to control the power transformed through the converter 1 and turns the input switch $Q_1$ off so that the bus voltage $V_{bus}$ acts to reduce the 2SBB indicator current $I_{L1}$ to zero before the next cycle commences. It thus reduces $I_{L1}$ to zero before $Q_3$ is turned off.

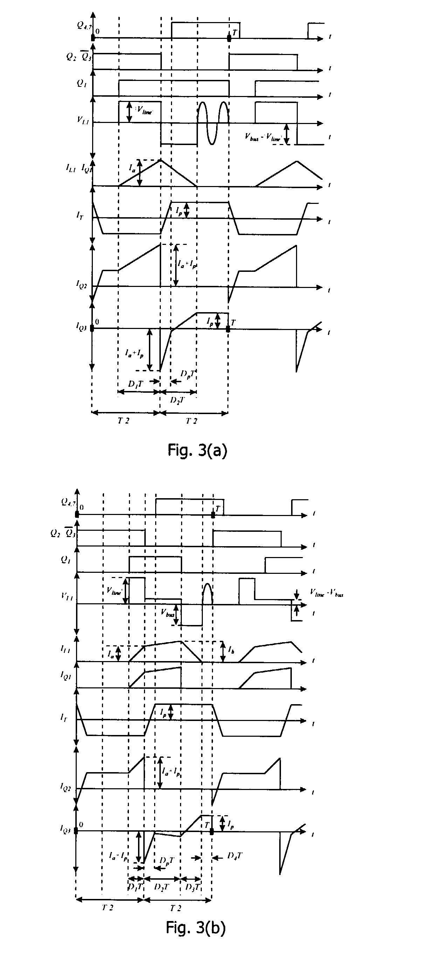

Referring to Fig. 3(a), a naturally discontinuous operation mode occurs for low line voltages where $i_{L1}(t)$ is naturally discontinuous, i.e. $D_2 < 0.5$. At time $t = T/2 - D_1 T$, $Q_1$ is turned on, the rectified line voltage, $v_{line}(t)$ acts to increase $i_{L1}(t)$ to $I_a$ at $t = T/2$ at which instant $Q_2$ turns off. During time $t = T/2$ to $T/2 + D_p T$ the primary and secondary bridges of the DAB are acting to reverse the current in $L_2$. It is assumed that the DAB is operating in balanced mode, i.e. $(N_2/N_1)V_{bus}/2 = E_b$. $Q_1$ turns off at the same time as $Q_3$. Assuming the bus voltage exceeds the line voltage, $V_{bus} - V_{line}(t)$ reduces $i_{L1}(t)$ to zero at $t = T/2 + D_2 T$. $Q_1$ turns on and off at zero current and $D_5$ does not conduct in this operating mode.

The boundary for naturally discontinuous operation is $D_2 = 0.5$. For higher load current and line voltage, $i_{L1}(t)$ would become continuous. This is avoided by operating the converter in a forced discontinuous mode as shown in Fig. 2b. The operation is as for the naturally discontinuous mode except that $Q_1$ is turned off at time $t = T/2 + D_2 T$ such that $V_{bus}$ acts to reduce $i_{L1}(t)$ to zero before $Q_3$ is turned off, i.e. $D_2 + D_3 < 0.5$.

The following is an analysis of circuit operation, on the basis of a presumption of lossless components.

*1. Naturally Discontinuous Operating Mode*

Referring to Fig. 3(a), the current in $L_1$ in this mode is characterised by the following equations:

$$D_1(t) = \sqrt{\frac{L_1}{T} 2 I_{line}(t) \frac{(V_{bus} - V_{line}(t))}{V_{line}(t) V_{bus}}},$$

$$I_a(t) = \frac{D_1(t) V_{line}(t) T}{L_1}, D_2(t) = \frac{V_{line}(t)}{V_{bus} - V_{line}(t)} D_1(t) \qquad (1)$$

where $V_{line}(t)$ and $I_{line}(t)$ are the instantaneous, rectified line voltage and current respectively.

Consider the case of maximum load current and peak minimum line voltage. Assuming $V_{bus} > 2 V_{line}(t)$ under these conditions then $D_2(t) < D_1(t)$ and the value for $L_1$ which results in minimum peak current is obtained from (1) by setting $D_1(t)$ to it's maximum practical value, $D_1(t)|_{max}$ which is close to 0.5.

Setting $D_2(t) = 0.5$ and $I_{line}(t) = P_{line}(t)/V_{line}(t)$ in (1), the line voltage corresponding to the boundary with forced discontinuous operating mode is obtained from

$$V_{line,thres}(t) = V_{bus} - 8 \frac{L_1 P_{line}(t)}{T V_{bus}}. \qquad (2)$$

*2. Forced Discontinuous Operating Mode*

Referring to Fig. 3(b), for maximum $Q_1$ duty cycle, $D_4(t)$ would be equal to zero. Assuming $D_4(t)$ is kept at a practically realisable, minimal level of $D_m$ and given that there should be no dc component across $L_1$, the relationship between $D_1(t)$ and $D_2(t)$ is:

$$D_1(t) = \left(\frac{1}{2} - D_m\right) \frac{V_{bus}}{V_{line}} - D_2(t) \qquad (3)$$

The current in $L_1$ may be characterised by (3) and the following set of equations:

$$D_2(t) = \sqrt{\frac{V_{bus}}{V_{line}(t)}\left(\frac{1}{2} - D_m\right)^2 - 2\frac{L_1 I_{line}(t)}{V_{bus}T}},$$

$$D_3(t) = \frac{1}{2} - D_2(t) - D_m, \quad I_a(t) = D_1(t)V_{line}(t)\frac{T}{L_1},$$

$$I_b(t) = I_a(t) + \frac{T}{L_1}D_2(t)(V_{line}(t) - V_{bus}). \tag{4}$$

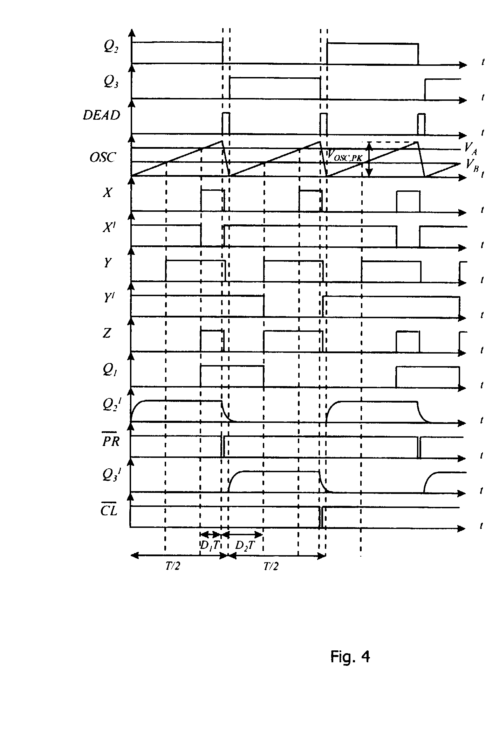

The modulator 4 is shown in Fig. 2, and its waveforms are shown in Fig. 4. A D-type flip flop, $U_4$ driven by $Q_2$'s gate drive is the principal component of the modulator. $V_A$ dictates $Q_1$ turn-on through comparator $U_1$ and $V_B$ it's turn-off through comparator $U_2$. The outputs of these comparators are directed to $U_4$'s clock input during the appropriate half periods by means of NAND gates. The dead-time between $Q_2$ and $Q_3$ gate drive signals is used to generate the signal *'DEAD'*. The saw-tooth signal, '*OSC* which is the positive input to $U_1$ and $U_2$ is obtained by charging $C_3$ with current source $I_{OSC}$ and discharging it every half period on the incidence of a logic high in *'DEAD'*.

The modulator 4 is clamped using the Preset and Clear inputs of $U_4$, $\overline{PR}$ and $\overline{CL}$. The $\overline{PR}$ input is driven to ensure that $Q_1$ is turned on as $Q_2$ is turned off if $V_A$ exceeds the oscillator peak and the $\overline{CL}$ input is driven to ensure that $Q_1$ is turned off with $Q_3$ if $V_B$ exceeds the oscillator peak. The turn off control comparator is disabled for low line voltages using $U_3$.

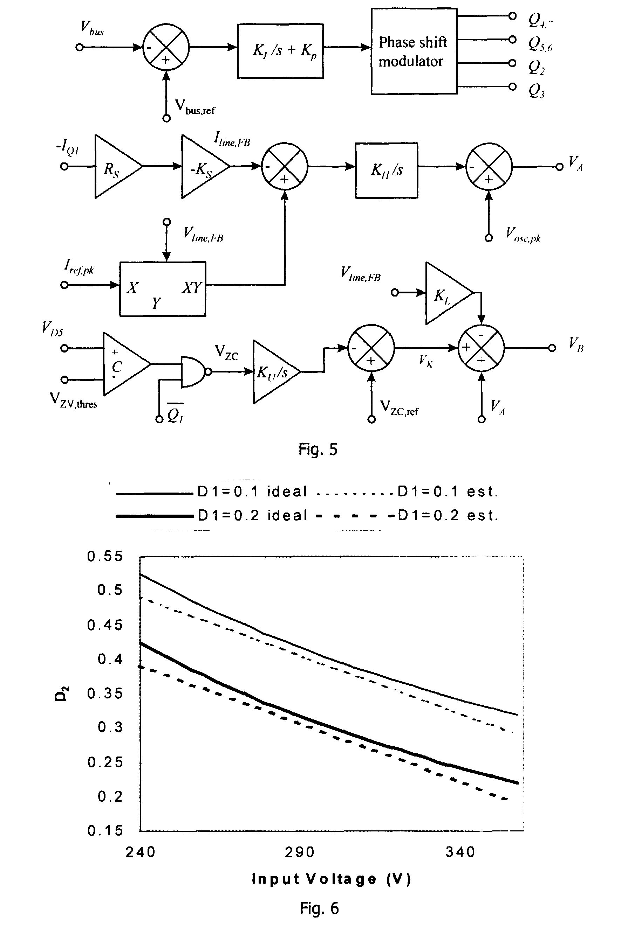

A diagram of a control circuit providing two analog input voltages $V_A$ and $V_B$ to the modulator 4 is illustrated in Fig. 5. This control circuit and the modulator 4 together form the complete controller of the converter 1. $V_A$ dictates the turn-on instant of the line input switch and $V_B$, it's turn-off instant. The generation of the gate drive voltages for the other switches, $Q_2$ to $Q_7$ is also shown. The phase shift modulator of the DAB 3 dictates the bus voltage $V_{bus}$ by controlling the switches $Q_2$, $Q_3$ and $Q_4$ through $Q_7$. This voltage control loop is compensated by the Proportional-Integral control method with $K_I$ as the integral gain and $K_p$ as the proportional gain.

The application for the converter 1 is battery charging, and the line current level is set by the battery charge controller which provides the line current reference input of peak value $I_{ref,pk}$. This is one input to a multiplier whose other input is the instantaneous, rectified line voltage which dictates the line current shape in accordance with the requirement for PFC. The output of the multiplier is the reference for the loop which acts on the current of $Q_1$, represented by $V_s$, the voltage across the current sense resistor $R_s$. This loop generates the turn-on control signal $V_A$, which sets $D_1(t)$, using simple integral compensation. The polarity of the integrator output is reversed by subtracting it from the peak of '*OSC*' so that an increase in the integrator output causes an increase in $V_s$.

The function of the turn-off control signal $V_B$, which sets $D_2(t)$ is to minimise the interval $D_4(t)$. $V_B$ is obtained by a combination of negative feedback and predictive feed-forward. The negative feedback part operates on $D_4(t)$. This can be transduced (converted) with minimal circuitry by monitoring $V_{D5}$. This voltage rises in a resonant fashion after the inductor current reaches zero and returns to zero on turn-on of $Q_2$. The predictive feed-forward part uses the line voltage and the interval $D_1(t)$ in the following linear approximation to (3);

$$D_2(t) = 1 - K_L V_{line}(t) - D_1(t). \tag{5}$$

An indication of the error between equation (5) and the ideal of equation (3) is given in Fig. 6 with $V_{bus}$ = 300V, $K_L$ = 0.0017 and $D_m$ = 0.035.

The specification and parameters of the power stage of the converter 1 set out in Table 1 below.

Table 1

| Parameter | Value |
|---|---|
| Maximum output power | 200W |
| Low Line voltage, $V_{line}$, (110-10%,115+10%) | 99-127Vac |
| High Line voltage, $V_{line}$, (220-10%,230+10%) | 198-253Vac |
| Output voltage, $E_b$ | 20V |
| Switching frequency, $f_{sw}$ | 45kHz |
| Bus voltage, $V_{bus}$ | 300V |

The converter 1 has insignificant energy storage capability with the result that the battery charge current is $sin^2$ in shape. The setting of $V_{bus}$ to 300V ensures $V_{bus} > 2 V_{line}(t)$ at the peak low line voltage. Assuming the efficiency of the converter is 79% at $V_{line}(t) = V_{line}(t)/_{min,pk}$ and $D_1(t)/_{max} = 0.43$ the buck-boost inductor value is 158μ H. From (2), the minimum threshold voltage is 203V, $V_{thres}$ of Fig. 3 is set to this value. The converter operates in the naturally discontinuous mode only over it's entire low-line voltage range. The details of the power components of the converter 1 are set out in Table 2 below.

Table 2

| Reference Designator | Description |
|---|---|
| $D_1, D_3, D_7$ | IR, HFA08TB60, 8A, 600V, ultra-fast |
| $D_2, D_4, D_5$ | SGS-Thomson, STTA806D, 8A, 600V, ultra-fast |
| $D_6$ | IR, 19TQ015, 19A, 15V, Schottky |
| $Q_1 - Q_3$ | Motorola, MTW24N40E, 0.16Ω, 400V |
| $Q_4 - Q_7$ | Motorola, STW80N05, 12mΩ, 50V |
| $L_1$ | 15mm O.D. iron powder toroid, 5T/side, 2.5μH/side |
| $L_2$ | RM12, 34T, 145μH |
| $L_3$ | RM10, 4T, 2.56μH |
| $Tx_1$ | ETD39, 6T primary, 48T secondary |

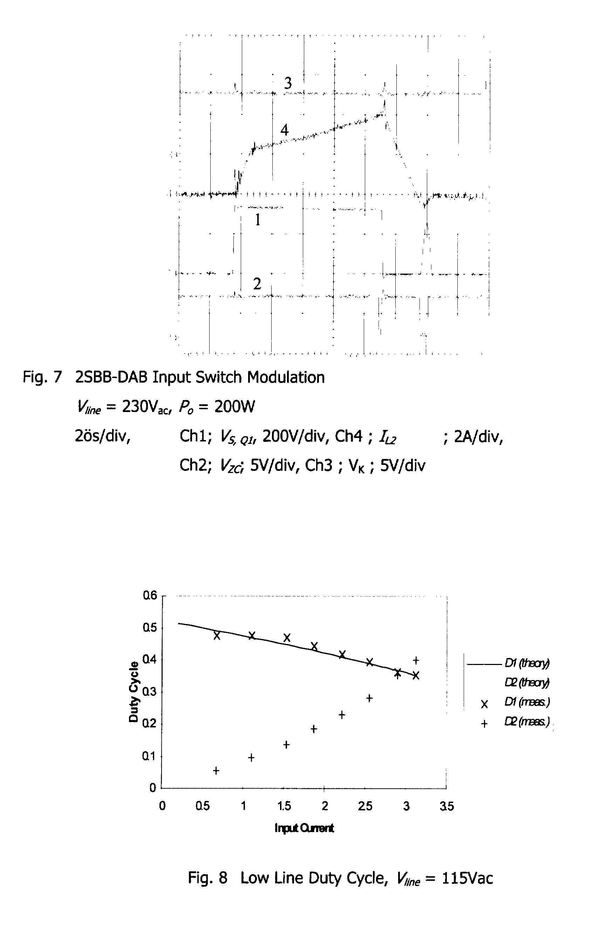

Fig. 7 shows input switch modulation. These waveforms illustrate how the time interval between the inductor current reaching zero and the turn-off of the upper switch, $Q_3$ of Fig. 1(b) is transformed to a duty cycle relative to the switching period, using the voltage across the line input free-wheeling diode. The turn-off of the line input switch is varied such that this duty cycle is kept to a low value.

Fig. 8 shows a low line duty cycle for $V_{line}$ = 115Vac. The duty cycle. $D_1$ reaches it's maximum value of 50% close to the cusp of the line voltage.

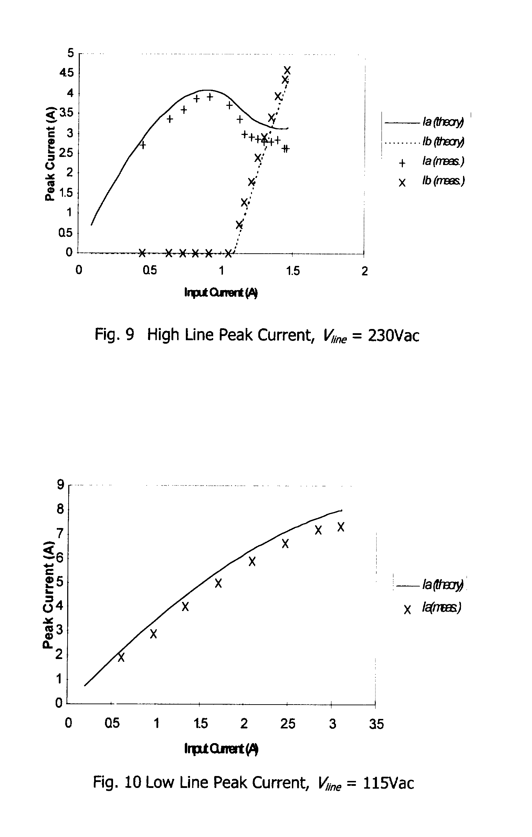

Fig. 9 shows high line peak current . The current referred to is that of the power transfer inductor of the 2SBB 2. The peak current, $I_a$ actually decreases with increasing line current once 2SBB 2 enters forced discontinuous operating mode. At the peak of the line voltage, the peak current, $I_a$ is approximately twice the line current while the peak current. $I_b$ is approximately three times that of the line current.

Fig. 10 shown low line peak current. The current referred to is that of the power transfer inductor of the 2SBB 2. At the peak of the line voltage, the peak current, $I_a$ in the power transfer inductor of 2SBB 2 reaches approximately 2.5 times that of the peak line current.

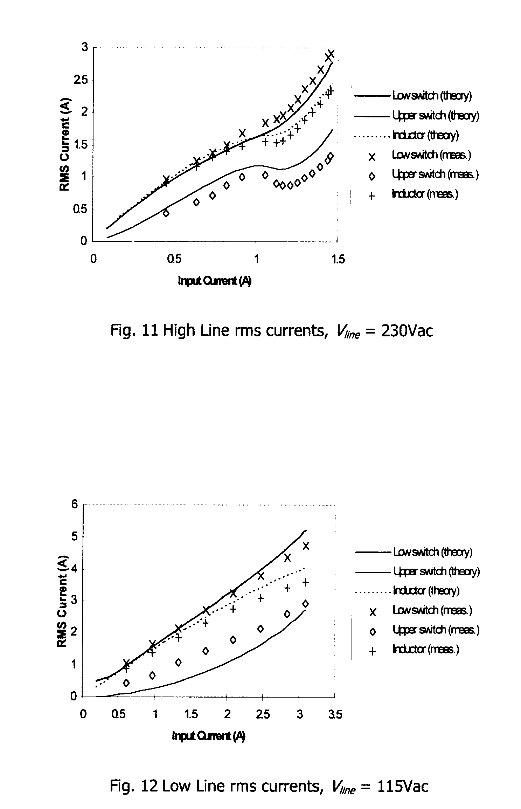

Fig. 11 shows high line rms currents. The lower switch rms current reaches twice the line current at the peak of the line voltage.

Fig. 12 shown low line rms currents. The lower switch rms current reaches 1.7 times that of the line current at the peak of the line voltage.

The invention is not limited to modulation of a 2SBB-DAB ac/dc converter. It may apply to a range of topologies which have a 2SBB integrated with an isolated dc/dc stage. For example, the dc/dc stage may comprise a phase shift controlled full bridge forward converter or an asymmetric duty cycle PWN controlled half or full bridge forward converter. The following sets out these embodiments in more detail.

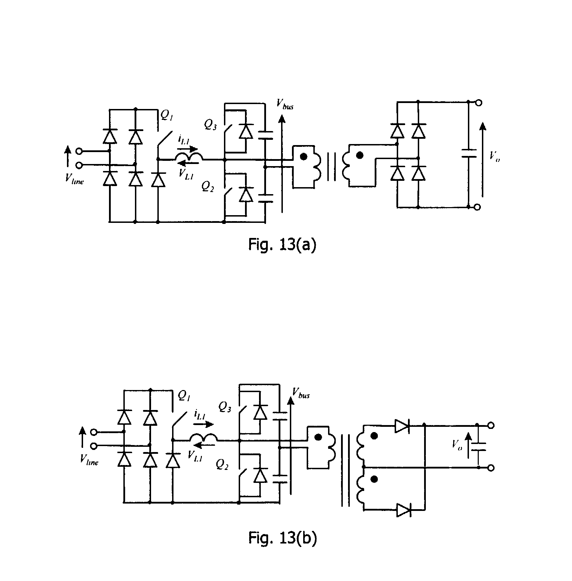

The control modulator 4 may be used to control the input switch of a converter formed by the integration of the 2SBB 2 with the uncontrolled half or full-bridge converter with secondary full-bridge or push-pull rectifier and capacitive output filter. Half-bridge versions are shown in Figure 13(a) and (b). The gate drive voltages for the switches of the bridge are fixed as shown in Figure 14. There is a constant dead-time, $D_{dead}T$ between switching instants for switches connected to the same pole.

The modulator 4 output parameters, $D_1T$ and $D_2T$ are derived in the same manner as described above for the 2SBBDAB converter.

The modulator 4 may be used to control the input switch of a converter formed by the integration of the 2SBB 2 with the phase shift modulated full-bridge forward converter with secondary full-bridge or push-pull rectifier and inductive output filter as shown in Figures 13(c) and (d). The gate drive voltages of the switches of each leg are turned on in alternate fashion with equal duty cycle and a fixed dead time $D_{dead1,2}T$ between the switching instants as shown in Figure 15. There is a phase shift $D_1(t)T$ between the gate drive voltages of the legs as shown. $D_f(t)$ is used to exert control on a current or voltage of the system. The range of variation of $D_f(t)$ is ±½.

The modulator 4 output parameters, $D_1(t)T$ and $D_2(t)T$ are derived in the same manner as was described above for the 2SBBDAB converter.

It will be appreciated that the ac/dc converter may have a high-value capacitor connected to the bus such that the output current of the converter is purely dc. It would thus be suitable for applications requiring a constant voltage source, as distinct from battery charging which requires the converter to deliver a controlled current.

In another embodiment, the dc/dc stage may comprise a bi-directional asymmetric duty cycle converter (2SBB-BADC) 20 is shown in Fig. 16. The half-bridge inverter, $Q_3$, $Q_2$ and the push-pull inverter, $Q_4$, $Q_5$ are driven such that one switch is driven at a duty cycle less than 50% and the other is turned on for the remainder of the switching period. For clarity, the same switch annotation has been used for the line side switches of the converters 1 and 20. As shown in Fig. 16, the 2SBB-BADC 20 converter has three ports for use in an Uninterruptible Power Supply application, *'LINE'* for sourcing power from the line, *'BUS'* for sourcing power for auxiliary equipment designed to obtain power from the normal line voltage source, and *'LVOUT'* for sourcing power for low voltage (<12V) circuitry and for sourcing power from a battery. The 2SBB-BADC topology, modulated according to the invention, exerts low current and voltage stresses on its switches for all possible power transfer modes and is applicable to many UPS and power supply configurations. Fig. 17 shows an on-line UPS 21, for use as a computer power supply with integral back-up, which uses the 2SBB-BADC 20. The inverter is non-isolated and would optimally generate a trapezoidal shaped ac output voltage of amplitude equal to $V_{bus}$. The 2SBB-BADC converter 20 operates in such a power system configuration such that the bus capacitor, $C_3$, attenuates line frequency ripple components and such that the second stage transfers negligible power at the line frequency and it's harmonics.

Referring again to Fig. 16, in on-line mode the 2SBB input switch, $Q_1$, is controlled by an inner and outer loop. The outer loop acts on the bus voltage, $V_{bus}$, with a bandwidth less than a tenth that of the line frequency while the inner one ensures PFC by forcing the average input current to track the input voltage and therefore has a bandwidth over ten times that of the line frequency. In this mode the duty cycle of the BADC, half-bridge stage serves to control the output voltage, $V_o$. In off-line mode the duty cycle of the BADC stage serves to control the bus voltage, $V_{bus}$.

A modulator 25 for the converter 20 is shown in Fig. 18(a) and characteristic waveforms are shown in Fig. 18 (b). $Q_2^1$ is the output of the voltage-mode Pulse Width Modulation (PWM) circuit which dictates the duty cycle, $D_L$ of the lower switch in the BADC stage. Aside from the time delay between the switching transitions, the upper switch, $Q_3$ is turned on for the remainder of the period. The logic pulse, *'CLR'* occurs at the turn-on of $Q_2$ which is hereafter considered to be the start of the period.

$V_{ON}$ is the output of the control circuit for $Q_1$ which acts on the shape of the input current and level of $V_{bus}$. $V_{ON}$ sets the time delay between the incidence of '*CLR*'and the turn-on of $Q_1$. $Q_1$ is turned off at the end of the period if it's current, $i_{Q1}(t)$ has reached zero before this instant, otherwise it is turned off such that the current in inductor $L_1$, $i_{L1}(t)$ is reduced to zero slightly before the end of the period. This functionality is realised using a comparator, one input of which is a voltage, $V_{s2}(t) = k_1 i_{Q1}(t) + k_2$, where $k_1$ and $k_2$ are constants and the other being an inverse saw-tooth shaped voltage with down-slope equal to $kV_{bus}/L_1$ which reaches $k_2$ a short interval, $D_m T$, before the end of the period. This modulation strategy may also be applied to the converter 1.

This modulation results in the following three operating modes for the 2SBB stage as shown in Figs 19(a) to 19(c). Fig. 19(a) shows a boost operating mode in which $i_{L1}(t)$ decays naturally to zero before the end of the period. Fig. 19(b) shows a buck-boost operating mode in which $Q_1$ is turned on before $Q_2$ is turned off and $Q_1$ is turned off before the end of the period. Fig 19(c) shows a buck operating mode in which $Q_1$ is turned on after $Q_2$ is turned off and $Q_1$ is turned off before the end of the period.

The logic signals used to drive the LVOUT-side switches; $Q_4$ and $Q_5$ of the converter 25 may be derived from those of the line-side half-bridge switches, $Q_2$ and $Q_3$ as shown in Figs. 20(a) and 20(b). In these drawings *'ONLINE'*= 1 corresponds to on-line operation and *'ONLINE'* = 0 to off-line operation. $Q_2$ and $Q_3$ may be directly applied to $Q_5$ and $Q_4$ respectively in on-line mode. In this mode, $i_o(t) > 0$ and the current in $L_2$ turns on the anti-parallel diodes of $Q_4$ and $Q_5$ within the intervals when both switches are off, $t_{dead1}$ and $t_{dead2}$. In off-line mode, $i_o(t) < 0$ and the gate drive signals of $Q_4$ and $Q_5$ must over-lap in order to provide a continuous path for the current in $L_2$.

The following analysis assumes lossless components and unity power factor line current.

Bi-directional Asymmetric Duty Cycle DC/DC Stage:

The characteristic voltage and current waveforms of the BADC converter stage of the converter 20 are given in Fig. 21. Assuming the dead-times between switching transitions may be ignored and operation is in steady state, the output voltage is:

$$V_o = D_L(1 - D_L)V_{bus} \frac{(N_{s1} + N_{s2})}{N_1}, \qquad (6)$$

and the dc component of the transformer current is:

$$I_{T.dc} = \left[(1 - D_L)N_{s1} - D_L N_{s2}\right]\frac{I_o}{N_1}.$$ (7)

AC/DC Stage:

Boost *Operating Mode:* Referring again to Fig. 19(a), $i_{L1}(t)$ in this mode is characterised by the equations:

$$D_1(t) = \sqrt{\frac{2L_1}{T}\frac{(V_{bus} - |V_{line}(t)|)}{R_{line}V_{bus}}}, \; I_a(t) = \frac{D_1(t)|V_{line}(t)|T}{L_1}, \; D_2(t) = \frac{|V_{line}(t)|}{V_{bus} - |V_{line}(t)|}D_1(t),$$ (8)

where $V_{line}(t)$ is the instantaneous rectified line voltage and the average input power is $V_{line,rms}^2/R_{line}$. Setting $D_2(t) < 1 - D_L - D_4$, the condition for operation in this mode is obtained from (8):

$$|V_{line}(t)| < \frac{T}{4L_1}V_{bus}R_{line}(1 - D_L - D_4)^2\left[\sqrt{1 + \frac{8L_1}{T}\frac{1}{R_{line}(1 - D_l - D_4)^2}} - 1\right].$$ (9)

Buck-Boost Operating Mode: Referring again to Fig. 19(b), $i_{L1}(t)$ in this mode is characterised by the equations:

$$D_2(t) = \sqrt{\frac{V_{bus}}{|V_{line}(t)|}(1-D_L-D_4)^2 - \frac{2L_1}{T}\frac{|V_{line}(t)|}{V_{bus}}\frac{1}{R_{line}}}, \; D_1(t) = \frac{V_{bus}}{|V_{line}(t)|}(1-D_L - D_4) - D_2(t)$$

$$D_3(t) = 1 - D_L - D_2(t) - D_4, \; I_a(t) = D_1(t)|V_{line}(t)|\frac{T}{L_1}, \; I_b(t) = I_a(t) + \frac{T}{L_1}D_2(t)(|V_{line}(t)|-V_{bus}).$$ (10)

The buck-boost stage is operating in this mode if the converse of equation (5) is true *and* $D_1(t) > 0$. If $D_1(t) > 0$ then:

$$\frac{2L_1}{T}\frac{1}{V_{bus}^2 R_{line}}\frac{1}{(1-D_L-D_4)^2}|V_{line}|^3 - |V_{line}| + V_{bus} > 0$$ (11)

*Buck Operating Mode*: Referring again to Fig. 19(c), $i_{L1}(t)$ in this mode is characterised by the equations:

$$D_2(t) = \sqrt{\frac{2L_1}{T}\frac{1}{R_{line}}\frac{|V_{line}(t)|}{|V_{line}(t)|-V_{bus}}}, \; I_b(t) = \frac{T}{L_1}(|V_{line}(t)|-V_{bus})D_2(t), D_3(t) = \frac{L_1}{T}\frac{I_b(t)}{V_{bus}}$$ (12)

The specification and parameters for the converter 20 are given in Table 3 below and the principal power circuit components are described in Table 4 below.

Table 3

| 2SBB-BADC SPECIFICATION AND PARAMETERS | |
| --- | --- |
| Parameter | Value |
| Maximum output current on-line, $I_o$ | 40A |
| Maximum output current off-line, $I_o$ | -40A |
| Output voltage, $V_o$ | 5V |
| On-line bus voltage, Vbus | 185V |
| Off-line bus voltage, $V_{bus}$ | 140V |
| Line voltage, $V_{line,rms}$ | 99-253Vac |

Table 3   (continued)

| 2SBB-BADC SPECIFICATION AND PARAMETERS | |
| --- | --- |
| Parameter | Value |
| Switching frequency, $1/T$ | 40kHz |

Table 4

| 2SBB-BADC POWER COMPONENT DESIGN DETAILS | | | |
| --- | --- | --- | --- |
| **Ref. Des.** | **Description** | **Ref. Des.** | **Description** |
| $D_1, D_3$ | 1 x MURH860CT, TO-220, 35ns, 600V | $D_7, D_9$ | UF5404, DO-210AP, 50ns, 400V |
| $D_2, D_4$ | BY229-600, TO-220, 450ns, 600V | $L_1$ | RM12, 26T, 90µH |
| $Q_1, Q_2$ | MTW24N40E, TO-247, 0.16Ω, 400V | $L_2$ | ETD34, 4.5µH, 9T |
| $Q_3$ | IRF740, TO-220, 0.55Ω, 400V | $Tx$ | ETD39, 22T:2T:1T, 25µH:4.1µH:1µH |
| $Q4, Q_5$ | 2 x SPP80N03L, TO-220, 8mΩ, 30V | $C_1, C_2$ | 1µF, 250V |
| $D_5$ | MUR4100E, 267-03, 75ns, 1kV | $C_3$ | 2 x 470µF, 250V, 0.27Ω |
| $D_6, D_8$ | IR31DQ03, DO-201AD, Schottky, 30V | $C_4$ | 3 x 10mF, 10V, 18mΩ |

Bi-directional Asymmetric Duty Cycle DC/DC Stage:

From equation (6) above, the output voltage, $V_o$ is reduced as $D_L$ deviates from 0.5 in either direction. The transformer is designed such that in steady state, $D_L = 0.33$ in order to allow a margin for control of $V_o$ in on-line mode and of the bus voltage, $V_{bus}$, in off-line mode. From (7), selection of $N_{s2} = 2N_{s1}$, reduces $I_{T,dc}$ to zero in steady state thereby minimising the gap required in the core of $Tx$ at the expense of increasing the ripple current in $L_2$. The resonant circuit formed by the bus capacitors, $C_1$ and $C_2$ and the magnetising inductance of $Tx$ introduce a double pole and a double right half plane zero into the control to output transfer function. The design of the compensation circuit is considerably simplified by the above transformer design approach as these poles and zeros are coincident in steady state.

AC/DC Stage:

This stage is designed such that:

a) operation is in boost mode only at minimum line voltage, thereby minimising switching losses and
b) the duty cycle of $Q_1$ is maximised in order to minimise the crest factor of it's drain current.

If the boundary between boost and buck-boost mode is to occur at the peak of the minimum line voltage, $V_{line}(t) = V_{lin\ pk\ min}$, and maximum load, then from equation (5) the relationship between $L_1$ and $V_{bus}$ is:

$$L_1 = \frac{T}{2}(1-D_L-D_4)^2 R_{line} \frac{V_{bus}}{V_{line\ pk\ min}^2}(V_{bus}-V_{line\ pk\ min}) \qquad (13)$$

From equation (8), $D_1(t)$ increases as $V_{line}(t)$ decreases and the maximum value of $D_1(t)$ is $D_L$, hence there is a compromise between criterion (b) above and minimising line current distortion. Suppose that the line current is to be proportional to the line voltage down to a line voltage of $m\ V_{line\ pk\ min}$, at minimum line voltage and maximum output current, i.e. $D_1(t) = D_L$ for $V_{line}(t) = m\ V_{line\ pk\ min}$ and $I_o = 40A$. In this case the relationship between $L_1$ and $V_{bus}$ becomes:

$$L_1 = \frac{T}{2}D_L^2 R_{line}\frac{V_{bus}}{V_{bus}-mV_{line\ pk}} \qquad (14)$$

Solving equations (13) and (14) for $V_{bus}$ gives:

$$V_{bus} = V_{line\,pk\,min} \left( \frac{m+1}{2} + \sqrt{\frac{(m-1)^2}{4} + \frac{D_L^2}{\left(1 - D_L - D_4\right)^2}} \right) \qquad (15)$$

The parameter values chosen for this prototype were: m = 0.5, $D_4$ = 0.1, $D_L$ = 0.33, and $V_{line\,pk\,min}$ =137V giving $V_{bus}$ = 190V and $L_1$ = 87µH. The lower half-bridge switch is driven at the lower duty cycle because this allows the setting of $V_{bus}$ to it's minimum level. The graphs of Fig. 22(a) and (b) and Figs 23(a) and (b) compare measured peak and rms current stresses respectively with those predicted by equations (6), (7) and (8), and Figs. 24(a) and (b) show the measured efficiency. The peak currents, $I_a$ and $I_b$ reler to the current, $I_{L1}$ of Fig. 16 in the power transfer inductor of 2SBB stage. From Fig. 22(a), the peak current, $I_a$ is approximately twice the line current and the peak current, $I_b$ is approximately equal to the line current at the peak of the line voltage for operation at nominal low line voltage. From Fig. 22(b), the peak current, $I_a$ is zero and the peak current, $I_b$ is approximately equal to 6.7 times the line current at the peak of the line voltage for operation at nominal high line voltage. From Fig. 23(a) the rms value of $I_{L1}$ is approximately 1.3 times that of the line current at the peak of the line voltage at nominal low line voltage. From Fig. 23(b), the rms value of $I_{L1}$ is approximately 3 times that of the line current at nominal high line voltage. From Fig. 24(a), the minimum efficiency for on-line operation occurs for minimum line voltage where the 2SBB operates in boost mode only. The line input switch turns on and off at zero current and the line input free-wheeling diode does not conduct in this mode. The converter is operating in off-line mode for the efficiency measurement of Fig. 24(b) such that, with reference to Fig. 16, power is transferred from LVOUT to BUS.

It will be appreciated that the invention provides a converter having a modulation strategy which allows power factor correction to be implemented while handling safer voltage levels. This is because the non-isolated dc voltage generated by the converter may be lower than the peak line voltage. Also, the line input switch ($Q_1$ in both illustrated embodiments) being in series with the line input voltage and modulated as described allows the converter input current to be directly controlled. This limits inrush current, provides high line voltage surge immunity, and provides overload protection. The modulation strategy also serves to reduce the ratings required of the switches in the converter.

The invention is not limited to the embodiments described but may be varied in construction and detail within the scope of the claims.

## Claims

1. An ac/dc converter of the type comprising a two switch buck boost (2SBB) ac/dc controlled rectifier stage to provide an intermediate dc voltage, a power transfer inductor in the controlled rectifier stage and being integrated with an isolated dc/dc stage to provide a converter dc output voltage isolated from the converter ac input voltage, and a controller with a modulator, characterised in that, the modulator (4, 25) comprises means for causing discontinuity of current through the power transfer inductor ($L_1$) while ensuring that its duty cycle is greater than that of an upper switch ($Q_3$) of a half bridge leg of the dc/dc stage to which the power transfer inductor is connected for all instantaneous levels of the converter ac input voltage less than the intermediate dc voltage.

2. An ac/dc converter as claimed in claim 1, wherein the control modulator comprises means for turning a controlled rectifier stage input switch on to dictate the power transferred through the converter, and for turning said input switch off such that the intermediate dc voltage acts to reduce the power transfer inductor current to zero before an upper switch in a half bridge leg of the dc/dc stage is turned off.

3. An ac/dc converter as claimed in claims 1 or 2, wherein the modulator comprises means for maintaining the switching frequency of the controlled rectifier stage the same as that of the isolated dc/dc converter stage.

4. An ac/dc converter as claimed in any preceding claim, wherein the modulator comprises means for maintaining the intermediate dc voltage at a level below that of a maximum peak of the input converter ac voltage.

5. An ac/dc converter as claimed in any preceding claim, wherein the modulator comprises means for turning off the controlled rectifier stage input switch by converting the current in said input switch to a current sense voltage by a pre-set conversion factor, and by generating a periodic inverse saw-tooth modulator control voltage having a frequency equal to that of the isolated dc/dc stage and having a negative slope proportional to the intermediate voltage divided by the power transfer inductance, by said conversion factor.

6. An ac/dc converter as claimed in claim 5, wherein the modulator comprises means for causing the turn-off to occur when the current sense voltage reaches said inverse saw-tooth voltage, and dc offset and phase of said inverse saw-tooth voltage is set such that the current in the power transfer inductor reaches zero a short time interval before the upper switch of the half bridge leg connected to this inductor is turned off.

**7.** An ac/dc converter as claimed in any preceding claim, wherein the dc/dc stage is a dual active bridge.

**8.** An ac/dc converter as claimed in any of claims 1 to 6, wherein the dc/dc stage is an asymmetric duty cycle forward converter.

**9.** An ac/dc converter as claimed in claim 8, wherein the isolated dc/dc stage comprises a half-bridge forward converter, and the modulator comprises means for controlling one of its half-bridge switches to have a duty cycle of less than 50% and the other half-bridge switch has the balance of the duty cycle so that there is substantially no overlap.

**10.** An ac/dc converter as claimed in claim 9, wherein then a lower of the two half bridge switches has the lower duty cycle.

Fig. 1(a)

Fig. 1(b)

Fig. 2

Fig. 3(a)

Fig. 3(b)

Fig. 4

Fig. 5

Fig. 6

Fig. 7   2SBB-DAB Input Switch Modulation

$V_{line}$ = 230V$_{ac}$, $P_o$ = 200W

2ös/div,          Ch1; $V_{S, Q1}$, 200V/div, Ch4 ; $I_{L2}$          ; 2A/div,

                    Ch2; $V_{ZC}$; 5V/div, Ch3 ; V$_K$ ; 5V/div

Fig. 8   Low Line Duty Cycle, $V_{line}$ = 115Vac

Fig. 9 High Line Peak Current, $V_{line}$ = 230Vac

Fig. 10 Low Line Peak Current, $V_{line}$ = 115Vac

Fig. 11 High Line rms currents, $V_{line}$ = 230Vac

Fig. 12 Low Line rms currents, $V_{line}$ = 115Vac

Fig. 13(a)

Fig. 13(b)

Fig. 13(c)

Fig. 13(d)

Fig. 14 Waveforms of uncontrolled half or full-bridge converter

Fig. 15 Waveforms of phase shift modulator for full-bridge converter

Fig. 16    2SBB-BADC converter

**21**

Fig. 17 On-Line UPS Configuration using 2SBB-BADC converter

**25**

Fig. 18(a) Modulator for line-side switches of 2SBB-BADC

23

Fig. 18(b)

Fig. 19(a)

Fig. 19(b)

Fig. 19(c)

Fig. 19 Input stage characteristic waveforms of DLTE modulated 2SBB-BADC converter

(a) Boost mode, (b) Buck-boost mode, (c) Buck mode

Fig. 20(a)

Fig. 20(b)

Fig. 20    Gate drive logic generation for LVOUT-side switches

(a)    Desired waveforms, (b) Logic circuit.

Fig. 21 Asymmetric Duty Cycle, Half-Bridge characteristic waveforms

Fig. 22(a)    $I_a$, $I_b$ vs. $I_{line}$, $V_{line,rms} = 115V$, $I_o = 40A$, $I_{bus} = 0A$

Fig. 22(b)    $I_a$, $I_b$ vs. $I_{line}$, $V_{line,rms} = 230V$, $I_o = 40A$, $I_{bus} = 0A$

Fig. 23(a)    $I_{L1,rms}$ vs. $I_{line}$, $V_{line,rms} = 115V$, $I_o = 40A$, $I_{bus} = 0A$

Fig. 23(b)    $I_{L1,rms}$ vs. $I_{line}$, $V_{line,rms} = 230V$, $I_o = 40A$, $I_{bus} = 0A$

Fig. 24(a)     On-line efficiency vs $V_{line,rms}$, $I_o = 40A$, $I_{bus} = 0A$

Fig. 24(b)     Off-line efficiency vs. $V_{bus}I_{bus}$, $V_o = 4.9V$, $V_{bus} = 140V$

Fig. 24 2SBB-BADC